# EUROPÄISCHE PATENTANMELDUNG

(11) **EP 1 777 244 A1**
(43) Veröffentlichungstag der Anmeldung: **25.04.2007**
(21) Anmeldenummer: 06121728.7
(22) Anmeldetag: 04.10.2006
(51) Int. Cl.: C08G 18/66, B29C 44/12, B29C 44/32

(54) **Polyurethanschaumstoffe zur Rohrdämmung**

(30) Priorität: 19.10.2005 DE 102005050410
(71) Anmelder: BASF AKTIENGESELLSCHAFT, 67056 Ludwigshafen (DE)
(72) Erfinder: Grieser-Schmitz, Christof, 49076, Osnabrück (DE); Ellersiek, Carsten, 49525, Lengerich (DE)

(57) **Zusammenfassung**

Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,

dadurch gekennzeichnet, dass man die Umsetzung bei einer Verdichtung von größer 1,1 durchführt, wobei unter dem Ausdruck "Verdichtung" der Quotienten aus der Gesamtfülldichte des Rohrspaltes dividiert durch die freigeschäumte Kernrohdichte bestimmt an einem unverdichteten Schaumkörper zu verstehen ist, und wobei man die Isocyanatkomponente (a) und die Polyolmischung (b) mittels eines Mischkopfes, der axial zwischen Mantelrohr und Mediumrohr bewegt wird, einträgt.

## Beschreibung

Die Erfindung betrifft ein Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
wobei man die Umsetzung bei einer Verdichtung von größer 1,1, bevorzugt größer 1,19 durchführt, besonders bevorzugt größer 1,25, wobei unter "Verdichtung" der Quotienten aus der Gesamtfülldichte des Rohrspaltes dividiert durch die freigeschäumte Kernrohdichte bestimmt an einem unverdichteten Schaumkörper zu verstehen ist, und wobei man die Isocyanatkomponente (a) und die Polyolmischung (b) mittels eines Mischkopfes, der axial zwischen Mantelrohr und Mediumrohr bewegt wird, einträgt.

Mit Polyurethanschaumstoffen gedämmte Rohre sind im Stand der Technik bekannt und beispielsweise in EP-A-865 893 und DE-A-197 42 012 beschrieben.

Der überwiegende Anteil an vorgedämmten Rohren, die PUR-Schaum zur Dämmung nutzen wird mit Hilfe der diskontinuierlichen Rohr-in-Rohr Produktion hergestellt. Im Rahmen dieses Verfahrens wird das Mediumrohr (in der Regel Stahl) mit sternförmigen Abstandshaltern versehen, die der Zentrierung des inneren Rohres dienen. Das Mediumrohr wird in das äußere Hüllrohr geschoben (in der Regel Polyethylen), so dass sich ein Ringspalt zwischen beiden Rohren ergibt. Aufgrund seiner hervorragenden Dämmeigenschaften wird dieser Ringspalt mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

Neben der oben beschriebenen Methode gibt es noch weitere Möglichkeiten entsprechende Rohre herzustellen. Ein innovatives Verfahren hierfür stellt die "Lanzentechnik" dar. Hierbei wird der Mischkopf während der Produktion durch den Ringspalt bewegt. Hierfür kann entweder der Mischkopf selbst oder das Rohr bewegt werden. Währenddessen strömt das flüssige PUR-Reaktionsgemisch aus, steigt auf und kann dann das Rohr tragen. Deshalb können bei diesem Verfahren die oben erwähnten Abstandshalter entfallen. Mit dem Lanzenverfahren können Rohre mit einer niedrigeren Schaumdichte bzw. besseren Schaumdichtenverteilung hergestellt werden. Ein weiterer Vorteil ist die Möglichkeit, feinzelligere Schäume einzusetzen, die durch den Einsatz reaktiverer Polyolkomponenten erzielt werden können.

Beim Lanzenverfahren treten zwei Probleme einzeln oder kombiniert auf: Mangelnde Druckfestigkeiten (Bedingung > 0,3 N/mm² nach EN 253:2003) und/oder ungenügende Zentrierung des Stahlrohres (Tabelle 7, Koaxialitätstoleranz in Abhängigkeit vom Nennaußendurchmesser, EN 253:2003).

Aufgabe der Erfindung war es daher, ein Polyurethansystem bereitzustellen, welches vorteilhaft bei der Herstellung von gedämmten Rohren verwendet werden kann und dort zu einem Polyurethanschaumstoff mit sehr guter Druckfestigkeit (> 0,3 N/mm² nach EN 253) führt, mit dem eine hervorragende Zentrierung des Stahlrohres (Mediumrohrs) ermöglicht wird.

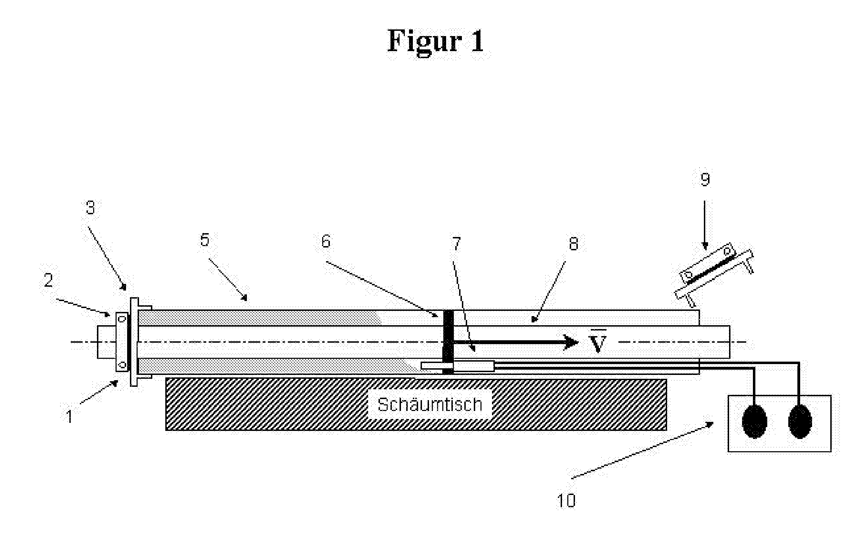

Die Aufgaben konnten durch das eingangs dargestellte Verfahren gelöst werden. Erstmalig konnte in einem Verfahren zur Rohrverschäumung mittels der Lanzentechnik bei der erfindungsgemäß hohen Verdichtung gearbeitet werden.
Das Verfahren der Lanzentechnik wird beispielhaft in der Figur 1 dargestellt. In der Figur 1 haben die Zahlen die folgende Bedeutung:
1: Dichtring
2: Schelle
3: Endkappe
5: Mantelrohr
6: Führungsring
7: Mischkopf
8: Mediumrohr
9: Verschlussdeckel
10: PU-Schäumanlage

In einem Verfahren gemäß Figur 1 handelt es sich um ein diskontinuierliches Verfahren. Im Rahmen dieses Verfahrens wird zwischen dem Mediumrohr (in der Regel Stahl) und dem äußeren Mantelrohr (in der Regel Polyethylen) ein Führungsring mit dem Mischkopf geschoben, der axial beweglich ist und zudem als Abstandshalter zwischen Mediumrohr und Mantelrohr dient. Der Ringspalt zwischen Mediumrohr und Mantelrohr wird aufgrund seiner guten Dämmeigenschaften mit Polyurethanschaumstoff gefüllt. Das Befüllen in den Ringspalt erfolgt bevorzugt mittels einer Polyurethandosiermaschine, die das flüssige Reaktionsgemisch über den Mischkopf in noch flüssiger Form einträgt.

Erfindungsgemäß wird man die Umsetzung der Isocyanatkomponente mit der Polyolkomponente bei einer Verdichtung von größer 1,1 durchführen. Unter Verdichtung versteht man den Quotienten aus der Gesamtfülldichte des Rohrspaltes dividiert durch die freigeschäumte Kernrohdichte bestimmt an einem unverdichteten Schaumkörper. Diese Verdichtung kann dadurch erreicht werden, dass man die Reaktionsprofil des Schaumes so einstellt, dass der frische Schaum den bereits eingefüllten Schaum verdichtet. Anders ausgedrückt verdichtet der Schaum von innen heraus. Durch die Verdichtung des Schaumsystems wird erreicht, dass durch die Ausbildung eines stabileren Zellgerüstes die Druckfestigkeit positiv beeinflusst wird. Die Zentrierung des Mediumrohres wird durch erhöhte Verdichtung verbessert, da der Schaum nach dem vollständigen Füllen des Ringspaltes weiter Druck aufbaut, der dann von allen Seiten gegen das Mediumrohr drückt und nicht, wie bei weniger verdichtetem Schaum, überwiegend von unten und so das Rohr nach oben schiebt. Die Verdichtung hilft zudem, den auszufüllenden Rohrspalt vollständig zu füllen. Zusätzlich führt Verdichtung zu einer besseren Haftung zum Stahl- und PE-Rohr.

Die bei der Umsetzung eingesetzte Polyolmischung kann üblicherweise (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthalten. Dabei weist die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe bevorzugt eine Viskosität von kleiner 3000 mPas, bevorzugt weniger als 2400 mPas, mehr bevorzugt weniger als 2200 mPas, besonders bevorzugt weniger als 1900 mPas, gemessen nach DIN 53019 bei 20 °C, auf. Dabei bezieht sich diese Viskositätsangabe auf Polyolmischungen (b), die wie dargestellt keine physikalischen Treibmittel enthalten. Als Untergrenze der Viskosität haben sich Werte von 200 mPas, bevorzugt 400 mPas, besonders bevorzugt 600 mPas, gemessen nach DIN 53019 bei 20°C, als sinnvoll erwiesen.

Es ist grundsätzlich auch möglich, der Polyolmischung physikalische Treibmittel hinzufügen. Die Zugabe von physikalischem Treibmittel führt jedoch zu einer signifikanten Absenkung der Viskosität. Daher beziehen sich die oben gemachten Angaben zur Viskosität der Polyolmischung (b), auch für den Fall, dass sie physikalische Treibmittel enthält, auf die Viskosität der Polyolmischung (b) ohne Zusatz von physikalischen Treibmitteln.

Diese Ausgangsstoffe werden nachfolgend ausführlich dargestellt:

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Zur Herstellung von Polyurethan-Hartschaumstoffen wird insbesondere Roh-MDI eingesetzt.

In einer bevorzugten Ausführungsform wird die Isocyanatkomponente (a) so gewählt, dass sie eine Viskosität weniger als 600 mPas, bevorzugt von 100 bis 450, besonders bevorzugt von 120 bis 350, insbesondere von 180 bis 320 mPas, gemessen nach DIN 53019 bei 20°C, aufweist.

Als Polyole (Bestandteil b1) können allgemein für diesen Zweck bekannte Polyole zum Einsatz kommen. In Betracht kommen z.B. Verbindungen mit mindestens zwei gegenüber Isocyanat reaktiven Gruppen, das heißt mit mindestens zwei mit Isocyanatgruppen reaktiven Wasserstoffatomen. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im allgemeinen 1,9 bis 8, bevorzugt 2,4 bis 7, besonders bevorzugt 2,9 bis 6.

Die Polyole (b1) weisen eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im allgemeinen 1000 mg KOH/g, bevorzugt 900 mg KOH/g, besonders 800 mg KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält die Komponente (b1) Polyetherpolyole, die nach bekannten Verfahren, beispielsweise durch anionische Polymerisation mit Alkalihydroxiden, wie Natrium-oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin (TDA), Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Diethylenglykol, Glycerin und Pentaerythrit verwendet.

Bevorzugt enthält die Polyolmischung (b) mindestens ein Polyol (b1i), dass eine Funktionalität gegenüber Isocyanaten von größer 3 und eine Hydroxylzahl größer 300 mg KOH/g aufweist. Bevorzugt weist das Polyol (b1i) eine Viskosität von kleiner 2500 mPas, gemessen nach DIN 53019 bei 25 °C, auf. Besonders bevorzugt wird man als Polyol (b1i) ein Polyetherpolyalkohol einsetzen, dass erhältlich ist durch Alkoxylierung von Saccharose und Diethylenglykol sowie gegebenenfalls Pentaerythrit mit Ethylenoxid und/oder Propylenoxid.

Die Polyolmischung kann optional als Bestandteil (b2) Katalysatoren enthalten. Als Katalysatoren (b2) werden üblicherweise Verbindungen verwendet, welche die PUR und/oder PIR-Reaktion der Isocyanatgruppen beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im allgemeinen in einer Menge von 0,001 bis 5 Gew.-%, insbesondere von 0,05 bis 3,5 Gew.-% Katalysator, bezogen auf das Gewicht der Komponente (b), eingesetzt.

Bevorzugt wird man vor der Umsetzung der Isocyanatkomponente (a) mit der Polyolmischung (b) Glycin, N-((2-Hydroxy-5-nonylphenyl)methyl)-N-methyl-mononatrium Salz (CAS-Nummer 56968-08-2) in die Polyolmischung (b) mischen, besonders bevorzugt zwischen 0,01 und 3,5 Gew.-% Glycin, N-((2-Hydroxy-5-nonylphenyl)methyl)-N-methyl-mononatrium Salz (CAS-Nummer 56968-08-2) in die Polyolmischung (b) mischen, wobei sich die Gewichtsangaben auf das Gesamtgewicht der Polyolmischung (b) enthaltend Glycin, N-((2-Hydroxy-5-nonylphenyl)methyl)-N-methyl-mononatrium Salz (CAS-Nummer 56968-08-2) bezieht.

In dieser Schrift gilt im Zweifel die CAS-Nummer als eindeutige chemische Bezeichnung.

Bevorzugt wird zusätzlich zu Glycin, N-((2-Hydroxy-5-nonylphenyl)methyl)-N-methyl-mononatrium Salz (CAS-Nummer 56968-08-2) als Katalysator (b2) auch (2-Hydroxypropyl)trimethylammonium-2-ethylhexanoat (CAS-Nummer 62314-22-1), 1-Propanammonium-2-hydroxy-N,N,N-trimethyl-formiat, Trimethylhydroxypropylammoniumformiat, 2-((2-Dimethylamino)ethyl)methylamino)ethanol (CAS-Nummer 2212-32-0) und/oder N,N',N"-Tris(dimethylamino-propyl)hexahydrotriazin (CAS-Nummer 15875-13-5) eingesetzt.

Besonders bevorzugt wird man vor der Umsetzung der Isocyanatkomponente (a) mit der Polyolmischung (b) zwischen 0,01 und 3,5 Gew.-% N,N',N"-Tris(dimethylaminopropyl)hexahydrotriazin (CAS-Nummer 15875-13-5) in die Polyolmischung (b) mischen, wobei sich die Gewichtsangaben auf das Gesamtgewicht der Polyolmischung (b) enthaltend N,N',N"-Tris(dimethylamino-propyl)hexahydrotriazin bezieht.

Besonders bevorzugt ist ferner, dass man zusätzlich zu Glycin, N-((2-Hydroxy-5-nonylphenyl)methyl)-N-methyl-mononatrium Salz (CAS-Nummer 56968-08-2) als Katalysator (b2) auch Dimethylcyclohexylamin (CAS-Nummer 98-94-2) einsetzt.

Besonders bevorzugt wird man vor der Umsetzung der Isocyanatkomponente (a) mit der Polyolmischung (b) zwischen 0,01 und 3,5 Gew.-% Dimethylcyclohexylamin in die Polyolmischung (b) mischen, wobei sich die Gewichtsangaben auf das Gesamtgewicht der Polyolmischung (b) enthaltend Dimethylcyclohexylamin bezieht.

Besonders wird man zusätzlich zu Glycin, N-((2-Hydroxy-5-nonylphenyl)methyl)-N-methyl-mononatrium Salz (CAS-Nummer 56968-08-2) als Katalysator (b2) auch Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) einsetzen. Besonders bevorzugt wird man vor der Umsetzung der Isocyanatkomponente (a) mit der Polyolmischung (b) zwischen 0,01 und 3,5 Gew.-% Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) in die Polyolmischung (b) mischen, wobei sich die Gewichtsangaben auf das Gesamtgewicht der Polyolmischung (b) enthaltend Methylbis(2-dimethylaminoethyl)amin (CAS-Nummer 3030-47-5) und/oder N,N,N',N'-tetramethyl-2,2'oxybis-(ethylamin) (CAS-Nummer 3033-62-3) bezieht.

Die Polyolmischung kann ferner optional als Bestandteil (b3) chemische Treibmittel enthalten. Als chemische Treibmittel sind Wasser oder Carbonsäuren, insbesondere Ameisensäure als chemisches Treibmittel bevorzugt. Das chemische Treibmittel wird im allgemeinen in einer Menge von 0,1 bis 5 Gew.-%, insbesondere von 0,5 bis 3,0 Gew.-%, bezogen auf das Gewicht der Komponente (b), eingesetzt.

Wie vorstehend erwähnt kann die Polyolmischung physikalisches Treibmittel enthalten. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten b) eingesetzt.

In einer bevorzugten Ausführungsform enthält die Polyolmischung (b) als Bestandteil (b4) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer werden im allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel werden im allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel), eingesetzt.

Die Komponenten (b4) und (b5) können in der Polyolmischung einzeln oder in Kombination eingesetzt werden.

Bei der Umsetzung werden die Polyisocyanate (a) und die Polyolmischung (b) im allgemeinen in solchen Mengen zur Umsetzung gebracht, dass die Isocyanat-Kennzahl des Schaums 90 bis 250, bevorzugt 100 bis 200 beträgt.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,25 N/mm², bevorzugt größer 0,28 N/mm², besonders bevorzugt größer 0,30 N/mm², gemessen nach DIN 53421, aufweist.

Dem erfindungsgemäßen Polyurethansystem können gegebenenfalls auch noch Zusatzstoffe (b6) einverleibt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel) beziehen.

Die erfindungsgemäßen Polyurethansysteme finden bevorzugt zur Herstellung von gedämmten Rohren, beispielsweise von Fernwärmerohren, Anwendung. Gegenstand der Erfindung ist somit die Verwendung des erfindungsgemäßen Polyurethansystems zur Herstellung von gedämmten Rohren.

In einer bevorzugten Ausführungsform wird das erfindungsgemäße Polyurethansystem zur Herstellung von gedämmten Verbundmantelrohre für erdverlegte Fernwärmenetze gemäß DIN EN 253 verwendet.

Weiterhin ist Gegenstand der Erfindung ein gedämmtes Rohr für erdverlegte Fernwärmenetze, aufgebaut aus
i) einem Mediumrohr
ii) einer Schicht aus Dämmmaterial, enthaltend den erfindungsgemäßen Polyurethanschaumstoff, und
iii) einem Mantelrohr.

Bei dem Mediumrohr (i) handelt es sich im allgemeinen um ein Stahlrohr mit einem Außendurchmesser von 1 bis 120 cm, bevorzugt 4 bis 110 cm und einer Länge von 1 bis 24 Meter, bevorzugt 6 bis 16 Meter.

Auf der Außenseite des Mediumrohres angeordnet ist eine Schicht aus Dämmmaterial (ii), enthaltend den erfindungsgemäßen Polyurethanschaumstoff. Diese Schicht weist im allgemeinen eine Dicke von 1 bis 20 cm, bevorzugt 2 bis 10 cm auf.

In einer bevorzugten Ausführungsform weist die Schicht aus Dämmmaterial eine Gesamtrohdichte von 55 bis 100 kg/m³, bevorzugt von 60 bis 75 kg/m³, besonders bevorzugt von 60 bis 67 kg/m³ auf. Unter Gesamtrohdichte ist hier die Rohdichteverteilung über den Rohrquerschnitt und die Rohrlänge gemeint.

In einer weiteren bevorzugten Ausführungsform weist die Schicht aus Dämmmaterial (ii), enthaltend den erfindungsgemäßen Polyurethanschaumstoff eine Wärmeleitfähigkeit von weniger als 27 mW/mK, bevorzugt von 20 bis 26,0, besonders bevorzugt 20 bis 24, gemessen nach EN ISO 8497 auf.

Das Mantelrohr (iii) umgibt die Schicht aus Dämmmaterial und besteht im allgemeinen aus Kunststoff, beispielsweise aus Polyethylen, und weist üblicherweise eine Dicke von 1 bis 30 mm auf. Der Innendurchmesser des Mantelrohrs beträgt im allgemeinen 6 bis 140 cm, bevorzugt 10 bis 120 cm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält.

Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr für erdverlegte Fernwärmenetze, welches die Anforderungen von DIN EN 253 erfüllt.

Bevorzugt wird man die Isocyanatkomponente (a) und die Polyolmischung (b) mittels eines Mischkopfes, der axial zwischen Mantelrohr und Mediumrohr bewegt wird, eintragen. Dabei dient der Mischkopf während des Schäumvorganges bevorzugt als Abstandshalter zwischen Mediumrohr und Mantelrohr.

Der Einsatz des erfindungsgemäßen Polyurethansystems führt im erfindungsgemäßen Verfahren zur Herstellung gedämmter Rohre zu folgenden Vorteilen:

Es können Druckfestigkeiten erzielt werden, die oberhalb von 0,25 N/mm² liegen. Idealerweise werden Rohre hergestellt, die Druckfestigkeiten > 0,3 N/mm² besitzen und der EN 253 entsprechen.

Mit dem erfindungsgemäßen Polyurethanschaumstoff können gedämmte Rohre mit einer Zentrierung des Mediumrohres erzielt werden, die die Anforderungen nach Tabelle 7 - Koaxialitätstoleranz in Abhängigkeit vom Nennaußendurchmesser, EN 253:2003 erfüllen.

### Beispiele:

Die in der Tabelle 1 dargestellten Rezepturen wurden verschäumt. Die Produkteigenschaften sind ebenfalls in der Tabelle 1 dargestellt.

**Tabelle 1:**

| Beispiel | 1 | 2 | 3 | 4 |
|---|---|---|---|---|
| Polyol A | 40 | - | 40 | - |
| Polyol B | 44,8 | 44,8 | 45,8 | 45,8 |
| Polyol C | 10 | 10 | 10 | 10 |
| Polyol D | - | 40 | - | 40 |
| Tegostab® B 8467 | 1,5 | 1,5 | 1,5 | 1,5 |
| Kat 1 | 0,8 | 0,8 | 0,8 | 0,8 |
| Kat 2 | 0,2 | 0,2 | 0,2 | 0,2 |
| Kat 3 | 0,7 | 0,7 | 0,7 | 0,7 |
| Kat 4 | 1,0 | 1,0 | - | - |
| Wasser | 1,0 | 1,0 | 1,0 | 1,0 |
| Summe | 100,0 | 100,0 | 100,0 | 100,0 |
| Pentan | 6,0 | 6,0 | 6,0 | 6,0 |
| Lupranat® M 20S | 132 | 132 | 132 | 132 |
| Isocyanat-Index | 130 | 130 | 130 | 130 |
| Viskosität [mPa*s] | 2800 | 4200 | 2800 | 4200 |
| Zentrierung-Abweichung (D=125 mm)** | 2 mm | 3 mm | 2 mm | 10 mm |
| Druckfestigkeit*** | 0,42 N/mm² | 0,40 N/mm² | 0,34 N/mm² | 0,25 N/mm² |
| Verdichtungsfaktor | 1,2 | 1,15 | 1,1 | 1,05 |
| | | | | |

| | OH-Zahl | Funktionalität | Viskosität [25°C] | MG [g/mol] |
|---|---|---|---|---|
| Polyol A | 403 mg KOH/g | 3,9 | 2200 | 550 |
| Polyol B | 405 mg KOH/g | 3,8 | 17000 | 530 |
| Polyol C | 400 mg KOH/g | 3 | 370 | 420 |
| Polyol D | 490 mg KOH/g | 4,3 | 8300 | 500 |

| | | | | |
|---|---|---|---|---|
| ** EN 253 Prüfkriterium ist Außendurchmesserabhängig, erfüllt bei s = 3 mm (D=75 - 160 mm) *** EN 253 erfüllt, bei Druckfestigkeiten >= 0,3 N/mm² | | | | |

- Polyol A:: gestartet mit Saccharose, Pentaerythrit und Diethylenglykol Polyol B: gestartet mit TDA, alkoxyliert mit EO und PO
- Polyol C:: gestartet mit Glycerin, alkoxyliert mit PO
- Polyol D:: gestartet mit Sorbitol, alkoxyliert mit PO
- Kat 1:: Dimethylcyclohexylamin (CAS-Nummer 98-94-2)
- Kat 2:: Lupragen® N 600 (BASF Aktiengesellschaft), N,N',N"-Tris(dimethylaminopropyl)hexahydrotriazin (CAS-Nummer 15875-13-5)
- Kat 3:: Lupragen® N 301 (BASF Aktiengesellschaft), Methylbis(2-dimethylaminoethyl)amin (CAS-Nummer 3030-47-5)
- Kat 4:: Dabco® Curithane® 52, enthält Glycin, N-((2-Hydroxy-5-nonylphenyl)-methyl)-N-methyl-mononatrium Salz (CAS-Nummer 56968-08-2) Lupranat® M20S (BASF Aktiengesellschaft): MDI

Vergleicht man die Druckfestigkeiten der vier verschiedenen Rezepturen so erkennt man, dass durch die Verdichtung die Druckfestigkeit positiv beeinflusst wird. Man erkennt, dass mit steigendem Verdichtungsgrad die Druckfestigkeit des Schaumes zunimmt.

## Patentansprüche

1. Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
**dadurch gekennzeichnet, dass** man die Umsetzung bei einer Verdichtung von größer 1,1 durchführt, wobei unter dem Ausdruck "Verdichtung" der Quotienten aus der Gesamtfülldichte des Rohrspaltes dividiert durch die freigeschäumte Kernrohdichte bestimmt an einem unverdichteten Schaumkörper zu verstehen ist, und wobei man die Isocyanatkomponente (a) und die Polyolmischung (b) mittels eines Mischkopfes, der axial zwischen Mantelrohr und Mediumrohr bewegt wird, einträgt.

2. Verfahren gemäß Anspruch 1, **dadurch gekennzeichnet, dass** die Polyolmischung (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthält.

3. Verfahren gemäß Anspruch 1, **dadurch gekennzeichnet, dass** man vor der Umsetzung der Isocyanatkomponente (a) mit der Polyolmischung (b) Glycin, N-((2-Hydroxy-5-nonylphenyl)methyl)-N-methyl-mononatrium Salz (CAS-Nummer 56968-08-2) in die Polyolmischung (b) mischt.

4. Verfahren gemäß Anspruch 3, **dadurch gekennzeichnet, dass** man zwischen 0,01 und 3,5 Gew.-% Glycin, N-((2-Hydroxy-5-nonylphenyl)methyl)-N-methyl-mononatrium Salz (CAS-Nummer 56968-08-2) in die Polyolmischung (b) mischt, wobei sich die Gewichtsangaben auf das Gesamtgewicht der Polyolmischung (b) enthaltend N-((2-Hydroxy-5-nonylphenyl)methyl)-N-methyl-mononatrium Salz (CAS-Nummer 56968-08-2) bezieht.

5. Verfahren gemäß Anspruch 3, **dadurch gekennzeichnet, dass** man zusätzlich zu Glycin, N-((2-Hydroxy-5-nonylphenyl)methyl)-N-methyl-mononatrium Salz (CAS-Nummer 56968-08-2) als Katalysator (b2) auch (2-Hydroxypropyl)trimethylammonium-2-ethylhexanoat (CAS-Nummer 62314-22-1), 1-Propanammonium-2-hydroxy-N,N,N-trimethyl-formiat, Trimethylhydroxypropylammoniumformiat, 2-((2-Dimethylamino)ethyl)methylamino)ethanol (CAS-Nummer 2212-32-0) und/oder N,N',N"-Tris(dimethylamino-propyl)hexahydrotriazin (CAS-Nummer 15875-13-5) einsetzt.

6. Verfahren gemäß Anspruch 1, **dadurch gekennzeichnet, dass** man vor der Umsetzung der Isocyanatkomponente (a) mit der Polyolmischung (b) zwischen 0,01 und 3,5 Gew.-% N,N',N"-Tris(dimethylamino-propyl)hexahydrotriazin (CAS-Nummer 15875-13-5) in die Polyolmischung (b) mischt, wobei sich die Gewichtsangaben auf das Gesamtgewicht der Polyolmischung (b) enthaltend N,N',N"-Tris(dimethylamino-propyl)hexahydrotriazin bezieht.

7. Verfahren gemäß Anspruch 3, **dadurch gekennzeichnet, dass** man zusätzlich zu Glycin, N-((2-Hydroxy-5-nonylphenyl)methyl)-N-methyl-mononatrium Salz (CAS-Nummer 56968-08-2) als Katalysator (b2) auch Dimethylcyclohexylamin (CAS-Nummer 98-94-2) einsetzt.

8. Verfahren gemäß Anspruch 1, **dadurch gekennzeichnet, dass** man vor der Umsetzung der Isocyanatkomponente (a) mit der Polyolmischung (b) zwischen 0,01 und 3,5 Gew.-% Dimethylcyclohexylamin in die Polyolmischung (b) mischt, wobei sich die Gewichtsangaben auf das Gesamtgewicht der Polyolmischung (b) enthaltend Dimethylcyclohexylamin bezieht.

9. Verfahren gemäß Anspruch 3, **dadurch gekennzeichnet, dass** man zusätzlich zu Glycin, N-((2-Hydroxy-5-nonylphenyl)methyl)-N-methyl-mononatrium Salz (CAS-Nummer 56968-08-2) als Katalysator (b2) auch Methylbis(2-dimethylaminoethyl)-amin (CAS-Nummer 3030-47-5) und/oder N,N,N',N'-tetramethyl-2,2'oxybis(ethylamin) (CAS-Nummer 3033-62-3) einsetzt.

10. Verfahren gemäß Anspruch 1, **dadurch gekennzeichnet, dass** man vor der Umsetzung der Isocyanatkomponente (a) mit der Polyolmischung (b) zwischen 0,01 und 3,5 Gew.-% Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) in die Polyolmischung (b) mischt, wobei sich die Gewichtsangaben auf das Gesamtgewicht der Polyolmischung (b) enthaltend Methylbis(2-dimethylaminoethyl)amin (CAS-Nummer 3030-47-5) und/oder N,N,N',N'-tetramethyl-2,2'oxybis-(ethylamin) (CAS-Nummer 3033-62-3) bezieht.

11. Verfahren gemäß Anspruch 1, **dadurch gekennzeichnet, dass** man die Umsetzung bei einer Kennzahl zwischen 100 und 200 durchführt.

12. Verfahren gemäß Anspruch 1, **dadurch gekennzeichnet, dass** der Mischkopf während des Schäumvorganges als Abstandshalter zwischen Mediumrohr und Mantelrohr dient.

13. Verfahren gemäß Anspruch 1, **dadurch gekennzeichnet, dass** die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe eine Viskosität von kleiner 3000 mPas, gemessen nach DIN 53019 bei 20°C, aufweist.

14. Verfahren gemäß Anspruch 1, **dadurch gekennzeichnet, dass** die Polyolmischung (b) mindestens ein Polyol (b1i) enthält, dass eine Funktionalität gegenüber Isocyanaten von größer 3 und eine Hydroxylzahl größer 300 mg KOH/g aufweist.

15. Verfahren gemäß Anspruch 14, **dadurch gekennzeichnet, dass** das Polyol (b1i) eine Viskosität von kleiner 2500 mPas, gemessen nach DIN 53019 bei 25°C, aufweist.

16. Verfahren gemäß Anspruch 14 oder 15, **dadurch gekennzeichnet, dass** man als Polyol (b1i) ein Polyetherpolyalkohol einsetzt, dass erhältlich ist durch Alkoxylierung von Saccharose und Diethylenglykol sowie gegebenenfalls Pentaerythrit mit Ethylenoxid und/oder Propylenoxid.
